# EUROPEAN PATENT SPECIFICATION

(11) **EP 3 707 008 B1**
(45) Date of publication and mention of the grant of the patent: **28.07.2021**
(21) Application number: 18800572.2
(22) Date of filing: 06.11.2018
(51) Int. Cl.: B60B 29/00, B60B 30/10

(54) **LIFTING TOOL FOR MOTORBIKE WHEEL**
HUBWERKZEUG FÜR MOTORRADRAD
OUTIL DE LEVAGE POUR ROUE DE MOTO

(30) Priority: 08.11.2017 LU 100512
(43) Date of publication of application: 16.09.2020
(73) Proprietor: Fohr, Ludovic, 9993 Weiswampach (LU)
(72) Inventor: Fohr, Ludovic, 9993 Weiswampach (LU)
(74) Representative: Lecomte & Partners
(86) International application number: PCT/EP2018/080358
(87) International publication number: WO 2019/091983

(56) References cited:
- WO-A1-2007/108815
- DE-C- 537 725
- JP-A- H08 318 703
- JP-A- H09 267 607

## Description

### Technical field

The invention is directed to the field of tooling and the field of maintenance of vehicles such as motorbikes. More specifically, the invention is directed to the field of maintenance to the wheels of motorbikes.

### Background art

Prior art patent document published DE 20 2014 104 277 U1 discloses a lifting tool for wheels of automotive vehicles. That tool comprises a scissor lifting mechanism with scissor pivoting arms, a lower frame and an upper frame. Each of the lower and upper frames comprises guiding rails for rolls at the ends of the pivoting arms on one longitudinal side of the scissor lifting mechanism. Wheels are mounted on the lower frame for allowing the tool to be moved by rolling on the floor. The scissor lifting mechanism comprises also a threaded spindle assembly for lifting and lowering the upper frame. That assembly cooperates with the upper ends of the scissor pivoting arms. On the upper frame are also mounted two parallel elongate rolls for supporting a wheel of an automotive vehicle. These rolls can be removed and replaced by two U-shaped brackets for engaging with a lower portion of a motorbike's frame for lifting said motorbike. In that configuration, the tool is oriented transversely to the motorbike.

Prior art patent document published FR 2 749 838 A1 discloses also a lifting tool for wheels of automotive vehicles, similar to the tool of the preceding document. In that tool, two bars for supporting the wheel are provided directly on the upper ends of the scissor pivoting arms, thereby avoiding the need of an upper frame as in the preceding document.

Prior art patent document published JP H09-267607 A discloses a lifting tool for a vehicle wheel, comprising a scissor lifting mechanism with scissor pivoting arms; wheels mounted on a bottom portion of the scissor lifting mechanism, for rolling on the floor; two parallel bars on a top portion of the scissor lifting mechanism, for supporting the wheel; wherein the wheels are mounted directly on the scissor pivoting arms.

Prior art patent document published JP H08-318703 A discloses a lifting tool for a vehicle wheel, according to the preamble of claim 1.

The above scissor lifting tools are designed for lifting large and heavy wheels of automotive vehicles and even truck wheels. They are therefore expensive and heavy to manipulate. They are not quite suitable for lifting motorbike wheels whose access is along the longitudinal axis of the motorbike, contrary to automotive and truck wheels which are accessed transversely.

Prior art patent document published US 2003/0221303 A1 discloses a third hand stand also referred to as a tire jack for enabling a single person to position and hold the tire/wheel assembly in the proper position while replacing the tire/wheel assembly on the swing arm or frame a motorcycle. The tire jack comprises a tire support, a lever, a means for connecting the tire support to the lever at a position offset from a longitudinal centerline of the tire support, wherein the tire support is oriented transverse to the lever. The tire jack is operated by positioning the tire support of the tire jack underneath the tire/wheel assembly and moving the lever such that the tire/wheel assembly is elevated and moved laterally until the tire/wheel assembly is properly aligned with the swing arm. The tire/wheel assembly is then attached to the motorcycle.

The above lever tire jack is advantageous in that it is light and rapid in use. However it requires a quite accurate handling for reaching the correct height and also to be permanently held while mounting the wheel to the motorbike. It is also not practical for moving and positioning the wheel along the longitudinal axis of the motorbike.

### Summary of invention

### Technical Problem

The invention has for technical problem to provide a lifting tool that is practical for mounting and dismounting motorbike wheels, and that is simple and cheap to manufacture.

### Technical solution

The invention is directed to a lifting tool for a vehicle wheel, comprising: a scissor lifting mechanism with scissor pivoting arms; wheels mounted on a bottom portion of the scissor lifting mechanism, for rolling on the floor; two parallel bars on a top portion of the scissor lifting mechanism, for supporting the wheel; wherein the scissor lifting mechanism further comprises two transverse arms each interconnecting the lower ends of two distant and parallel arms of the scissor pivoting arms, respectively; and wherein the wheels are mounted directly on the scissor pivoting arms.

According to a preferred embodiment, the scissor lifting mechanism comprises two distant and parallel pairs of the scissor pivoting arms, the wheels comprising four wheels, each of said wheels being mounted on a lower end of one of the arms, respectively.

According to a preferred embodiment, the two parallel bars are mounted directly on the scissor pivoting arms, two opposed ends of each of said bars being attached to upper ends of two distant and parallel arms of said arms, respectively.

According to a preferred embodiment, the scissor lifting mechanism comprises a spindle assembly for varying the distance between lower ends of the scissor pivoting arms.

According to a preferred embodiment, the spindle assembly comprises a threaded spindle extending through the transverse arms, said spindle abutting against a first one of said arms and engaging with a corresponding thread on the second of said arms.

According to a preferred embodiment, the scissor lifting mechanism comprises resilient means allowing an automatic lift movement of said mechanism until the bars reach the wheel lifted up from the floor.

According to a preferred embodiment, the resilient means comprise at least one traction spring with two ends anchored to the transverse arms or to the lower ends of one of the pairs of scissor pivoting arms, respectively.

According to a preferred embodiment, the spindle assembly is configured such that it slides freely through the first transverse arm during the automatic lift movement of the scissor lifting mechanism.

According to a preferred embodiment, the scissor lifting mechanism is configured such that the scissor pivoting arms of each pair of said arms are aligned in a lower position.

According to a preferred embodiment, one of the arms of each pair of scissor pivoting arms shows a recess for accommodating, the lower position, the bar or a wheel axe on the other arm of said pair.

According to a preferred embodiment, at least two of the wheels are swivel wheels, said wheels being preferably at one longitudinal end of the scissor lifting mechanism.

### Advantages of the invention

The invention is particularly interesting in that it provides a lifting tool that is particularly adapted for supporting a motorbike wheel, i.e. by showing a reduced height in a lower configuration and by being of a simple and therefore cheap construction. Most of the operators and motorbike owners take uncomfortable positions for releasing the weight of a motorbike wheel when removing the wheel axle, e.g. by bending their body above the rear part of the seat or even the tail of the motorbike and by extending one of their arms downwardly to grip an upper portion of the wheel rim. While this might work out when removing the axle for dismounting the wheel, this is much more difficult when remounting said wheel. Especially at the rear, the wheel needs to be aligned not only with the two oblong holes in the swing arms but also with a rear brake holder, for allowing insertion of the axle. In other words, the position in height of the wheel needs to be accurately adjusted for a proper and comfortable reinsertion of the axle. The invention avoids also potential damages to the brakes (calliper, brake pads and holder) and other surrounding parts of the motorbike while removing the axle and while positioning the wheel for insertion of said axle.

The lifting tool of the invention provides therefore a particularly convenient and adapted tool.

### Brief description of the drawings

Figure 1 is a perspective view of the rear wheel of a motorbike while being lifted by a lifting tool according to the invention.
Figures 2(a), 2(b) and 2(c) are views of successive steps of lifting a motorbike wheel with the lifting tool of figure 1, according to the invention.
Figure 3 is a side view of the lifting tool of figures 1 and 2;
Figure 4 is a top view of the lifting tool of figure 3.

### Description of an embodiment

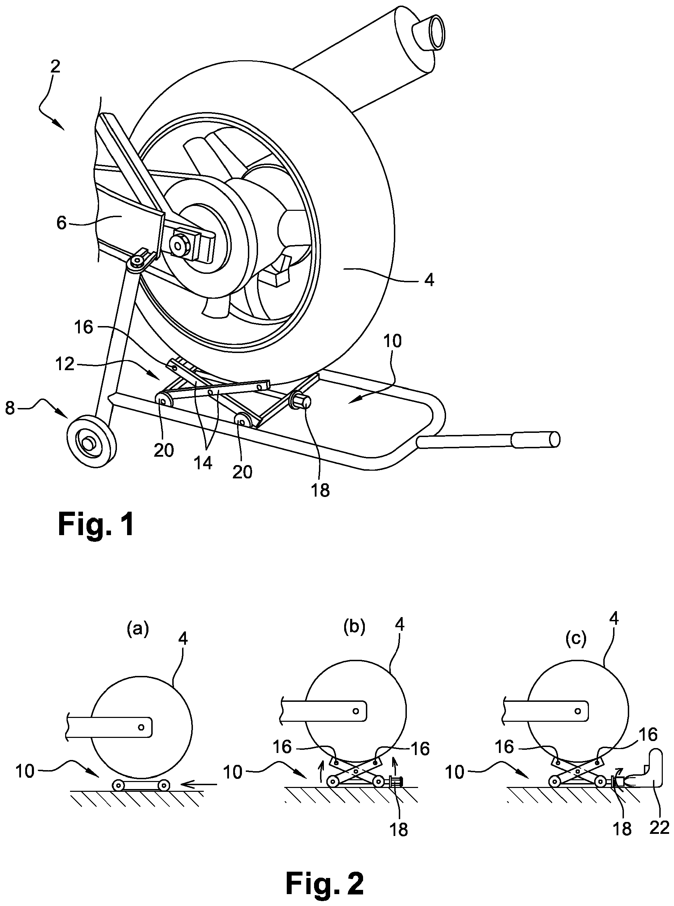

Figure 1 illustrates a motorbike where the rear wheel is lifted with a lifting tool according to the invention.

The motorbike 2 comprises a rear wheel 4 that is mounted on the rear swing arms 6. As is apparent in figure 1, the rear of the motorbike 2 is jacked up by means of the stand 8 that is as such well known to the skilled person. The stand 8 for instance comprises a frame with two upwards support ends engaging with the ends of the swing arms 6, rolls and a handle enabling a pivoting movement of the stander around the engagement of the support ends with the swing arms.

A lifting tool 10 is positioned under the rear wheel 4 and lifted up to contact said wheel so as to facilitate its dismounting from, and remounting on, the motorbike. Indeed, once the rear wheel is slightly lifted up, the wheel axle can be extracted out of the swing arms and the wheel without having to exert high efforts since the weight of the wheel does not act anymore on said axle.

The lifting tool 10 comprises a scissor lifting mechanism 12 with scissor pivoting arms 14. For instance, the scissor lifting mechanism 12 comprises two pairs of scissor pivoting arms, said pairs of arms being distant and parallel so as to be on each lateral side of the wheel when the lifting tool is in position under the wheel. Supporting bars 16 are attached to the upper ends of the scissor pivoting arms 14, said bars being for contacting the running surface of the wheel tire. The scissor lifting mechanism 12 comprises also a threaded spindle assembly 18 that cooperates with the lower ends of the scissor pivoting arms 14. Wheels 20 are mounted on the lower ends of the scissor pivoting arms 14.

Figures 2(a) to 2(c) illustrate different successive steps of use of the lifting tool of figure 1.

In figure 2(a), the wheel 4 is jacked up at a usual height, e.g. between 50 and 100mm, and the lifting tool 10, in a lower and nearly flat configuration, is rolled longitudinally under the wheel 4. In that configuration, the arms of each pair of scissor pivoting arms are essentially in, or at least close to alignment. The lifting tool is configured to show a total height in its lower configuration that is advantageously less than 50mm.

In figure 2(b), the lifting tool 10 is manipulated so as to free it from a state where resilient means tending to lift the tool are retained. This can be achieved by slightly manually lifting the tool so as to misalign the arms of each pair of scissor pivoting arms, leading to a de-neutralization of the resilient means, allowing them to act and lift up the tool up to a contact between the bars 16 and the wheel 4. The threaded spindle assembly 18 is configured not to hinder the lift up movement of the tool by virtue of the resilient means. For example, the spindle assembly 18 can be configured to allow a free sliding of a thrust portion of the spindle while the tool lifts up. The exceeding portion of the spindle resulting of the above sliding further to the lift up movement is visible at the right of the lifting tool in figure 2(b).

In figure 2(c), the wheel 4 can be slightly lifted so at to support its weight via the bars 16 and thereby unload the wheel axle. To that end, the threaded spindle assembly 18 is operated so as to catch up the exceeding portion of the spindle of the above described rapid lift up movement, and then further operated for unloading the wheel axle by rotation of the spindle. Depending on the dimensioning of the spindle assembly and more generally the lifting tool, the torque can be applied to the spindle manually by means of a knob (not represented), preferably an ergonomic knob of a sufficient diameter to provide a proper and stable gripping by the hand, or mechanically by a drill driver, preferably a cordless drill driver 22.

It goes without saying that what has been presented in relation with figures 2(a) to 2(c) applies also in the reverse order to remounting a wheel 4 on the vehicle 2.

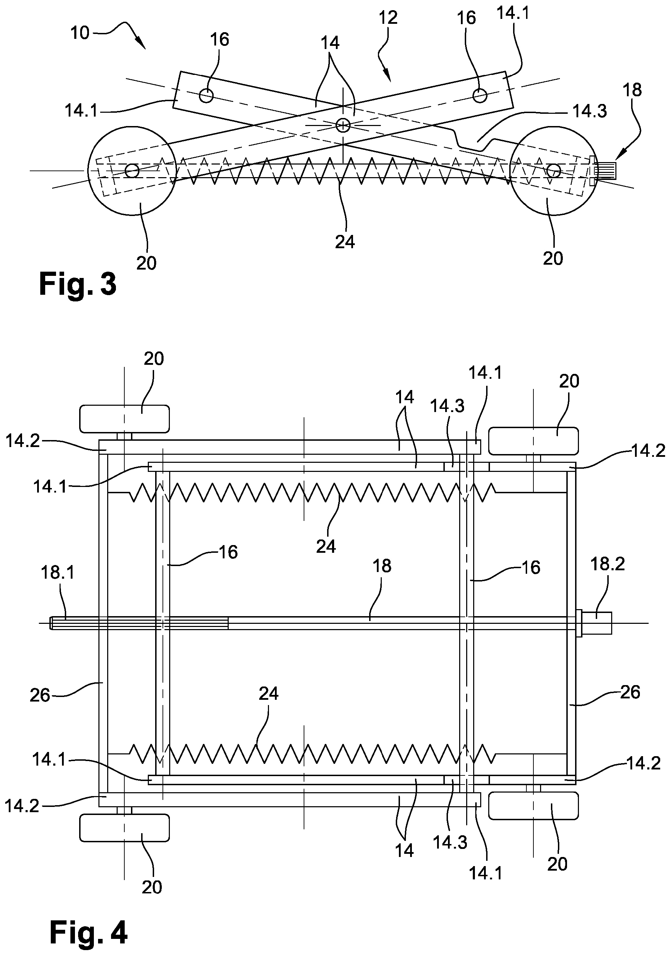

Figures 3 and 4 are more detailed views of the lifting tool of figures 1 and 2. Figure 3 is a side view whereas figure 4 is a top view.

Each of the scissor pivoting arms 14 of the scissor lifting mechanism 12 comprises a top end 14.1 and a lower end 14.2. These end are at top and end positions when the scissor lifting mechanism 12 is in a lifted configuration, as illustrated in figures 3 and 4, i.e. not as illustrated in figure 2(a). The top ends 14.1 of each of the arms 14, on each side, are interconnected by one of the bars 16. Each of the two bars 16 is preferably with a round cross-section, being however understood that other configurations can be considered. The lower ends 14.2 of each of the arms carries a wheel 20. Each wheel is mounted on a lower end of an arm so as to be free to rotate about its axis. The wheels 20 can have an outer diameter greater than 30mm and/or less than 50mm. The wheels 20 can be made of metal, plastic or a combination thereof. At least two of the wheels 20 can be pivoting or swivel wheels, i.e. able to freely rotate also about a vertical axis. For instance, the two wheels provided at one end of the lifting tool 10, relative to the longitudinal axis corresponding to the spindle 18, can be swivel wheels, thereby facilitating the positioning of the tool.

As is apparent in figures 3 and 4, one of the arms of each pair of scissor pivoting arms comprises a notch or recess 14.3 that receives one of the bars 16 when the scissor lifting mechanism 12 is in a lower and aligned configuration. As it appears more precisely in figure 4 but still visible in figure 3, this is the arm, of each pair, that is located on the inner side that shows such a recess 14.3, so that the corresponding bar 16 that extends above said inner arms can be accommodated in said recesses 14.3.

It is to be mentioned that in alternative to the above recesses 14.3, the outer arms 14 of the two pairs of scissor pivoting arms could be designed longer so that their top ends 14.1 would end beyond the lower ends 14.2 of the inner arms 14 (on the right side in figures 3 and 4, but not represented), and the corresponding bar 16 would be located beyond the lower ends 14.2 of the inner arms 14. In that case the wheel 20 would need to be more offset relative to the inner arms 14 and the outer arms extending above the axles of said wheels would then show recesses opened downwardly for accommodating the axels when in the lower position.

As this is apparent in figure 4, the lifting tool 10 comprises two transverse arms 26 interconnecting the lower ends 14.2 of the four arms, respectively. The threaded spindle 18 extends longitudinal and centrally through each of the two transverse arms 26. More specifically, the spindle 18 comprises a threaded portion 18.1 that engages with a corresponding female thread (not visible) on the corresponding transverse arm 26. The spindle 18 comprises also a head 18.2 that forms an abutting surface against the corresponding transverse arm 26 and also an end portion that can be rotatably engaged with a driving tool such as a screwdriver or a cordless drill driver. With reference to the above discussion in relation with figure 2(c), a gripping knob or hand-wheel can also be mounted on the end 18.2 of the spindle.

It shall be noticed that the engagement between the spindle 18 and the arms 14, for instance via the transverse arms 26, can show means that compensate the change of relative orientation between the arms 14 and the spindle 18. Indeed, in the lower configuration, the main directions of the arms and the spindle are essentially in the same plane, or at least parallel, whereas in the lifted configuration the arms are inclined relative to the horizontal plane comprising the axis of the spindle. Such compensating means can be means that allow a relative pivoting between the surfaces in contact with the spindle and the arms. For example, the transverse arms 26 could be pivotably mounted on the lower ends 14.2 of the arms. Alternatively, the transverse arms 26 could comprise pivotably mounted elements engaging with the spindle. Other mechanical compensation means, as such well known to the skilled person, can be considered.

The resilient means 24 comprise for instance two traction helical springs 24 anchored at both ends, each, at the transverse arms 26, so as to exert a resilient traction force between these two arms 26, tending to move these arms closer to each other. When the arms of each pair of scissor pivoting arms 14 are aligned, the lifting force normally produced by the resilient means 24 is absent or at least close to zero. Once the scissor lifting mechanism is manually lifted, the arms 14 of each pair of scissor pivoting arms are not aligned anymore and the attraction force of the resilient means 24 is converted into a lifting movement of the scissor lifting mechanism.

It goes without saying that the resilient means could take other forms, e.g. the spring(s) could be anchored to the arms 14 directly, or even torsion springs could be provided at the pivots between each pair of scissor pivoting arms. In such a case, an arresting mechanism could be provided between the arms for retaining them in the lower configuration against the resilient force of the resilient means. The release of that mechanism would then free the pivoting movement between these arms and allow the lifting tool to lift up towards the wheel.

The different arms and bars constituting the above lifting tool can be made of metal, like steel or aluminium, and/or of plastic material. They could also be made of wood. The connection between the different elements can therefore be achieved by several methods, like screwing, welding (when made of metal) and/or gluing.

The above lifting tool is particularly interesting in that it can show a reduced height in a lower configuration, enabling it to be rolled under a jacked-up wheel of a motorbike while being of a simple construction and particularly adapted for supporting a motorbike wheel.

## Claims

1. Lifting tool (10) for a vehicle wheel (4), comprising:
- a scissor lifting mechanism (12) with scissor pivoting arms (14);
- wheels (20) mounted on a lower portion of the scissor lifting mechanism (12), for rolling on the floor;
- two parallel bars (16) on a top portion of the scissor lifting mechanism (12), for supporting the vehicle wheel (4);
wherein
the scissor lifting mechanism (12) further comprises two transverse arms (26) each interconnecting the lower ends of two distant and parallel arms of the scissor pivoting arms, respectively;
**characterized in that**
the wheels (20) are mounted directly on the scissor pivoting arms (14).

2. Lifting tool (10) according to claim 1, wherein the scissor lifting mechanism (12) comprises two distant and parallel pairs of the scissor pivoting arms (14), the wheels comprising four wheels (20), each of said wheels being mounted on a lower end (14.2) of one of the arms (14), respectively.

3. Lifting tool (10) according to claim 2, wherein the two parallel bars (16) are mounted directly on the scissor pivoting arms (14), two opposed ends of each of said bars being attached to top ends (14.1) of two distant and parallel arms of said arms, respectively.

4. Lifting tool (10) according to any one of claims 1 to 3, wherein the scissor lifting mechanism (12) comprises a spindle assembly (18) for varying the distance between lower ends (14.2) of the scissor pivoting arms (14).

5. Lifting tool (10) according to claim 4, wherein the spindle assembly comprises a threaded spindle (18) extending through the transverse arms (26), said spindle (18) abutting against a first one of said arms (26) and engaging with a corresponding thread on the second of said arms (26).

6. Lifting tool (10) according to any one of claims 1 to 5, wherein the scissor lifting mechanism (12) comprises resilient means (24) allowing an automatic lift movement of said mechanism (12) until the bars (16) reach the vehicle wheel (4) lifted up from the floor.

7. Lifting tool (10) according to claims 5 and 6, wherein the resilient means (24) comprise at least one traction spring (24) with two ends anchored to the transverse arms (26) or to the lower ends (14.2) of one of each pair of scissor pivoting arms (14), respectively.

8. Lifting tool (10) according to one of claims 6 and 7, wherein the spindle assembly (18) is configured such that it slides freely through the first transverse arm (26) during the automatic lift movement of the scissor lifting mechanism (12).

9. Lifting tool (10) according to any one of claims 1 to 8, wherein the scissor lifting mechanism (12) is configured such that the scissor pivoting arms (14) of each pair of said arms are aligned in a lower position.

10. Lifting tool (10) according to claim 9, wherein one of the arms (14) of each pair of scissor pivoting arms shows a recess (14.3) for accommodating, in the lower position, the bar (16) or a wheel axle on the other arm of said pair.

11. Lifting tool (10) according to any one of claims 1 to 10, wherein at least two of the wheels (20) are swivel wheels, said wheels being preferably at one longitudinal end of the scissor lifting mechanism (12).

## Patentansprüche

1. Hebewerkzeug (10) für ein Fahrzeugrad (4), umfassend:
- einen Scherenhubmechanismus (12) mit Scherenschwenkarmen (14);
- Räder (20), die an einem unteren Abschnitt des Scherenhubmechanismus (12) montiert sind, um auf dem Boden zu rollen;
- zwei parallele Stangen (16) an einem oberen Abschnitt des Scherenhubmechanismus (12), zum Stützen des Fahrzeugrads (4),
wobei
der Scherenhubmechanismus (12) ferner zwei Querarme (26) umfasst, von denen jeder jeweils die unteren Enden von zwei voneinander beabstandeten und parallelen Armen von den Scherenschwenkarmen miteinander verbindet, **dadurch gekennzeichnet, dass** die Räder (20) direkt an den Scherenschwenkarmen (14) montiert sind.

2. Hebewerkzeug (10) nach Anspruch 1, wobei der Scherenhubmechanismus (12) zwei voneinander beabstandete und parallele Paare von den Scherenschwenkarmen (14) umfasst, wobei die Räder vier Räder (20) umfassen, wobei jedes von den Rädern jeweils an einem unteren Ende (14.2) von einem von den Armen (14) montiert ist.

3. Hebewerkzeug (10) nach Anspruch 2, wobei die zwei parallelen Stangen (16) direkt an den Scherenschwenkarmen (14) montiert sind, wobei die zwei einander entgegengesetzten Enden von jeder von den Stangen jeweils an oberen Enden (14.1) von zwei voneinander beabstandeten und parallelen Armen von den Armen angebracht sind.

4. Hebewerkzeug (10) nach einem der Ansprüche 1 bis 3, wobei der Scherenhubmechanismus (12) eine Spindelbaugruppe (18) zum Variieren des Abstands zwischen unteren Enden (14.2) der Scherenschwenkarme (14) umfasst.

5. Hebewerkzeug (10) nach Anspruch 4, wobei die Spindelbaugruppe eine Gewindespindel (18) umfasst, die sich durch die Querarme (26) erstreckt, wobei die Spindel (18) an einem ersten von den Armen (26) anstößt und mit einem entsprechenden Gewinde an dem zweiten von den Armen (26) in Eingriff steht.

6. Hebewerkzeug (10) nach einem der Ansprüche 1 bis 5, wobei der Scherenhubmechanismus (12) eine elastische Einrichtung (24) umfasst, die eine automatische Hubbewegung des Mechanismus (12) ermöglicht, bis die Stangen (16) das vom Boden abgehobene Fahrzeugrad (4) erreichen.

7. Hebewerkzeug (10) nach den Ansprüchen 5 und 6, wobei die elastische Einrichtung (24) mindestens eine Traktionsfeder (24) mit zwei Enden umfasst, die jeweils an den Querarmen (26) oder an den unteren Enden (14.2) von einem von jedem Paar von Scherenschwenkarmen (14) verankert sind.

8. Hebewerkzeug (10) nach einem der Ansprüche 6 und 7, wobei die Spindelbaugruppe (18) so gestaltet ist, dass sie während der automatischen Hubbewegung des Scherenhubmechanismus (12) frei durch den ersten Querarm (26) gleitet.

9. Hebewerkzeug (10) nach einem der Ansprüche 1 bis 8, wobei der Scherenhubmechanismus (12) so gestaltet ist, dass die Scherenschwenkarme (14) von jedem Paar dieser Arme in einer unteren Position auf einer Linie liegen.

10. Hebewerkzeug (10) nach Anspruch 9, wobei einer von den Armen (14) von jedem Paar von Scherenschwenkarmen eine Aussparung (14.3) zeigt zum Aufnehmen der Stange (16) oder einer Radachse an dem anderen Arm von dem Paar in der unteren Position.

11. Hebewerkzeug (10) nach einem der Ansprüche 1 bis 10, wobei mindestens zwei von den Rädern (20) Schwenkräder sind, wobei die Räder vorzugsweise an dem gleichen Längsende des Scherenhubmechanismus (12) liegen.

## Revendications

1. Outil de levage (10) pour une roue de véhicule (4), comprenant :
- un mécanisme de levage à ciseaux (12) avec des bras pivotants à ciseaux (14) ;
- des roues (20) montées sur une partie inférieure du mécanisme de levage à ciseaux (12), pour rouler sur le sol ;
- deux barres parallèles (16) sur une partie supérieure du mécanisme de levage à ciseaux (12), pour supporter la roue du véhicule (4) ;
dans lequel
le mécanisme de levage à ciseaux (12) comprend en outre deux bras transversaux (26) interconnectant chacun les extrémités inférieures de deux bras distants et parallèles des bras pivotants à ciseaux, respectivement.
**caractérisé en ce que**
les roues (20) sont montées directement sur les bras pivotants des ciseaux (14)

2. Outil de levage (10) selon la revendication 1, dans lequel le mécanisme de levage en ciseaux (12) comprend deux paires distantes et parallèles de bras pivotants en ciseaux (14), les roues comprenant quatre roues (20), chacune desdites roues étant montée sur une extrémité inférieure (14.2) de l'un des bras (14), respectivement.

3. Outil de levage (10) selon la revendication 2, dans lequel les deux barres parallèles (16) sont montées directement sur les bras pivotants en ciseaux (14), deux extrémités opposées de chacune desdites barres étant fixées aux extrémités supérieures (14.1) de deux bras distants et parallèles desdits bras, respectivement.

4. Outil de levage (10) selon l'une quelconque des revendications 1 à 3, dans lequel le mécanisme de levage en ciseaux (12) comprend un ensemble de broche (18) pour faire varier la distance entre les extrémités inférieures (14.2) des bras pivotants en ciseaux (14).

5. Outil de levage (10) selon la revendication 4, dans lequel l'ensemble de broche comprend une broche filetée (18) s'étendant à travers les bras transversaux (26), ladite broche (18) venant en butée contre un premier desdits bras (26) et s'engageant avec un filet correspondant sur le second desdits bras (26).

6. Outil de levage (10) selon l'une quelconque des revendications 1 à 5, dans lequel le mécanisme de levage à ciseaux (12) comprend des moyens élastiques (24) permettant un mouvement de levage automatique dudit mécanisme (12) jusqu'à ce que les barres (16) atteignent la roue de véhicule (4) soulevée du sol.

7. Outil de levage (10) selon les revendications 5 et 6, dans lequel les moyens élastiques (24) comprennent au moins un ressort de traction (24) avec deux extrémités ancrées aux bras transversaux (26) ou aux extrémités inférieures (14.2) d'une de chaque paire de bras pivotants en ciseaux (14), respectivement.

8. Outil de levage (10) selon l'une des revendications 6 et 7, dans lequel l'ensemble de broche (18) est configuré de manière à coulisser librement à travers le premier bras transversal (26) lors du mouvement de levage automatique du mécanisme de levage à ciseaux (12).

9. Outil de levage (10) selon l'une quelconque des revendications 1 à 8, dans lequel le mécanisme de levage en ciseaux (12) est configuré de sorte que les bras pivotants en ciseaux (14) de chaque paire desdits bras sont alignés dans une position basse.

10. Outil de levage (10) selon la revendication 9, dans lequel l'un des bras (14) de chaque paire de bras pivotants en ciseaux présente un évidement (14.3) pour recevoir, en position basse, la barre (16) ou un axe de roue sur l'autre bras de ladite paire.

11. Outil de levage (10) selon l'une quelconque des revendications 1 à 10, dans lequel au moins deux des roues (20) sont des roues pivotantes, lesdites roues étant de préférence à une extrémité longitudinale du mécanisme de levage en ciseaux (12).
